# EUROPEAN PATENT APPLICATION

(11) **EP 4 617 249 A1**
(43) Date of publication of application: **17.09.2025**
(21) Application number: 24162958.3
(22) Date of filing: 12.03.2024
(51) Int. Cl.: C04B 35/488, C04B 35/626, C04B 35/634, C04B 35/638, G04B 1/00, G04B 19/00, C04B 35/486

(54) **PROCESS FOR THE PREPARATION OF A PHOSPHORESCENT ZIRCONIA-BASED CERAMIC ARTICLE**

(71) Applicant: Richemont International S.A., 1752 Villars-sur-Glâne (CH)
(72) Inventor: GARTMANN, Nando, 9042 Speicher (CH); WALFORT, Bernhard Wilhelm Karl, 9245 Oberbüren (CH); ZELLER, Albert Paul, 9053 Teufen (CH)
(74) Representative: Ipsilon Lyon

(57) **Abstract**

The invention relates to a process for the preparation of a phosphorescent ceramic article, the article being a timepiece component or a part of a timepiece component. This process involves two milling steps.

## Description

### FIELD OF THE INVENTION

The invention relates to a process for the preparation of a phosphorescent zirconia-based ceramic article, the article being a timepiece component or a part of a timepiece component.

### BACKGROUND OF THE INVENTION

Luminescence has found applications in many technical fields such as biomedicine, lighting, sensing, displays, optical information storage...

In recent years, luminescence has also become an integral part of the watchmaking industry, fascinating and reflecting technological breakthrough in order to create timepieces that are not only functional, but also symbols of innovation and elegance. The ability to glow in the dark, providing readability in low-light conditions, has not only been a functional necessity but also a captivating feature that enhances the aesthetic of timepieces.

After relying for decades on radioactive elements such as radium or tritium to make watches glow, most high-end watches now use Swiss Super-Luminova^{®}. This phosphorescent material is composed of a phosphor, i.e. strontium aluminate activated by europium, which upon exposition to light stores photons that are reemited overtime so as to glow in the dark.

Nowadays, the Swiss Super-Luminova^{®} technology overwhelmingly dominates in the high-end phosphorescent watches market.

On the other hand, due to their high mechanical properties, such as hardness and wear-resistance, zirconia-based ceramics have been increasingly used in fields such as horology and jewellery.

Particularly in the watchmaking industry, ceramic materials have gained prominence as they provide improved resistance to scratches or abrasion to watch components.

Combining aesthetics, functional need and durability is a golden standard when producing any material. Phosphor compounds and zirconia-based ceramics have been combined to provide practical, readable in low-light conditions and visually appealing timepieces.

For instance, patent document JP2004292588 describes a zirconia-based (ZrO₂) ceramic comprising a strontium aluminate phosphor. The method for producing this zirconia ceramic involves:
(i) mixing and then pulverizing together ZrO₂, strontium aluminate phosphor, a coloring ingredient such as cobalt or manganese to provide a powder, and
(ii) press-molding the powder and sintering at 1300-1550°C under a reducing atmosphere.

Patent document EP2730636 discloses a persistent phosphorescent zirconia-based ceramic made of zirconia and strontium aluminate phosphor according to the steps of:
(i) mixing the zirconia and strontium aluminate together,
(ii) milling at 400 rpm (rotations per minute) for 30 minutes to give a suspension,
(iii) filtering and dying the suspension to form a green body,
(iv) debinding the green body and carrying out a first sintering step (pre-sintering) in an oxidizing atmosphere (850 to 1200°C) to afford a dense material, and
(v) carrying out a second sintering step under reducing conditions at 1350 to 1550°C.

In EP2730636, the single milling step (mixture of zirconia and strontium aluminate) involves a high speed, which requires a lot of energy and may be detrimental to the glowing properties of the phosphorescent material. On the other hand, since zirconia powder is typically supplied in an organic binder, using less energy than specified in EP2730636 (slower milling and/or shorter milling time) may not be sufficient to break up the zirconia particles within the binder.

Additionally, the two essential sintering steps of EP2730636 are time-consuming and increase the overall energy consumption, especially due to the two separate heating steps (pre-sintering and sintering) separated by a cooling step.

Accordingly, there is still a need for providing an alternative method for producing a persistent phosphorescent zirconia-based ceramic material for watch components.

The present invention provides a new process for producing a persistent phosphorescent zirconia-based ceramic material that overcomes the above-mentioned drawbacks and does not require the conventional pre-sintering step of the green body. The method also prevents the degradation of the phosphor compound since it relies on a first milling of the zirconia powder (without the phosphor compound), followed by a second milling step of a mixture of the zirconia powder and the phosphor compound. Both milling steps are performed under relatively mild conditions and, the process of the invention does not require a pre-sintering step.

These conditions provide a phosphorescent zirconia ceramic material having excellent persistence over time and light emission features, as well as excellent mechanical strength and abrasion resistance.

Furthermore, the pre-milling of the zirconia powder allows reducing the amount of phosphor compound than needs to be added for obtaining a persistent phosphorescence effect since it is not damaged during the first milling step.

### INVENTION

The invention relates to a process for the preparation of a phosphorescent ceramic article, the article being a timepiece component or a part of a timepiece component.

This process comprises the following steps:
a) forming a composition C1 by milling zirconia (ZrO₂) doped with yttria (Y₂O₃) and a binder (preferably an organic binder), preferably in water,
b) adding particles of strontium aluminate doped with at least one activating element to the composition C1 to form a mixture M1,
c) milling the mixture M1,
d) drying the milled mixture M1 to form a powder P1, preferably by spray drying the mixture M1,
e) forming a green body from the powder P1,
f) debinding the green body in an oxidizing atmosphere,
   wherein the debinding is carried out by heating at a ramp of between 10°C/h and 110°C/h, to reach a temperature T1 comprised between 500 and 1000°C,
g) forming a phosphorescent ceramic article by sintering the debinded green body resulting from step f), wherein the sintering is carried out in a reducing atmosphere by heating at a ramp of between 10°C/h and 120°C/h, to reach a temperature T2 comprised between 1400°C and 1600°C,
   wherein the process is free of heating treatment in an oxidizing atmosphere at a temperature higher than T1.

Furthermore, the milling of step c) is preferably carried out in milder conditions than the milling of step a). As a result, the process prevents the degradation of the phosphorescent material, which therefore improves the intensity of the signal and affords a longer lasting glow as compared to the prior art in which the phosphorescent material is partially deteriorated during harsh milling conditions. As a consequence, the invention also allows reducing the amount of phosphorescent material, and therefore the cost, since the phosphorescence is optimized.

Strontium aluminate doped with at least one activating element affords phosphorescent properties to the ceramic article resulting from the above process. The phosphorescence is persistent since, after being exposed to light of a shorter wavelength, the phosphorescent ceramic article emits light at a longer wavelength for minutes to hours, for instance for more than 8 hours. In general, phosphorescence is observed for a period that lasts until a luminance of less than 0.3 mCd/m² is reached, which is the lower limit of light perception of the human eye (" Phosphor Handbook", S. Shionoya and W.M. Yen, editors, CRC Press 1999, chapter 12).

According to the invention, "X and/or Y" means "X," or "Y," or "X and Y."

Also part of the invention are all the possible combinations among the different disclosed embodiments, whether they are preferred embodiments or embodiments given as example. In addition, when the ranges of values are indicated, the limits are part of these ranges. The disclosure also includes all the combinations among the limits of these ranges of values. For example, the ranges of values "1-20, preferably 5-15" imply the disclosure of the ranges "1-5," "1-15," "5-20" and " 15-20" and of the values 1, 5, 15 and 20. Additionally, the ranges "between XX and YY" and "from XX to YY" includes XX and YY.

### Process of preparation of the phosphorescent zirconia-based ceramic article

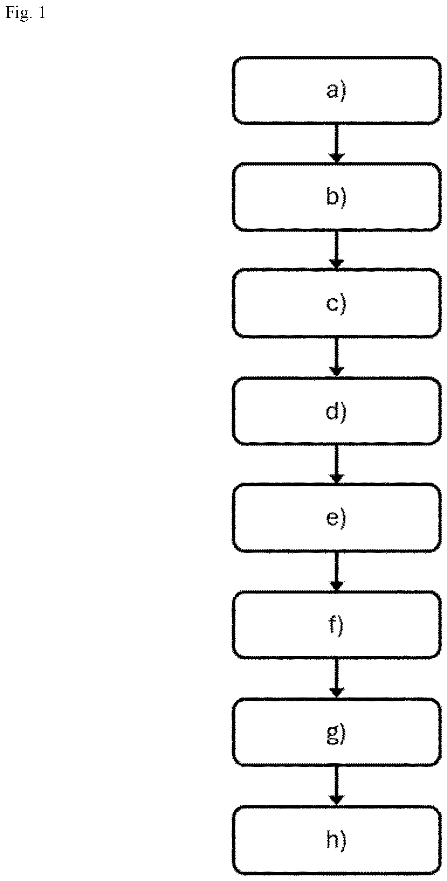

As already mentioned, the process according to the invention comprises the following steps (as also illustrated in the flow diagram of figure 1):
a) forming a composition C1 by milling zirconia (ZrO₂) doped with yttria (Y₂O₃) and a binder (preferably an organic binder), preferably in water,
b) adding particles of strontium aluminate doped with at least one activating element to the composition C1 to form a mixture M1,
c) milling the mixture M1,
d) forming a powder P1 by drying the milled mixture M1,
e) forming a green body from the powder P1, preferably by molding the powder P1,
f) debinding the green body in an oxidizing atmosphere,
g) forming a phosphorescent ceramic article by sintering the debinded green body resulting from step f),
h) optionally, controlled cooling of the sintered body.

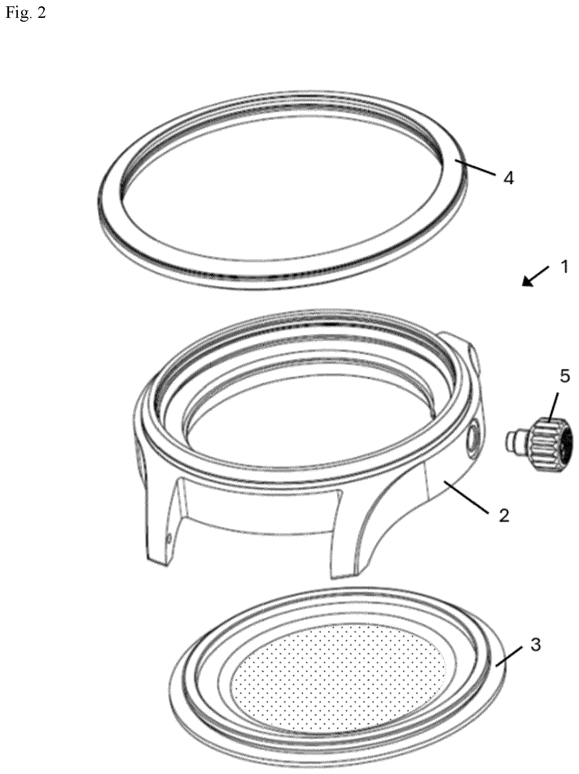

The timepiece may be a watch or clock, and the component may for example comprise a case middle, an outer or inner bezel, a case back, a crown, a pusher, a bracelet link, a bracelet clasp or buckle, a dial, a dial index, an indicating hand, an indicator disk, a main plate, a bridge, a gear, a wheel, an axle, a spring, a sprung balance, a lever, or an oscillating weight. In the illustrated example of Figure 2, the timepiece component forms part of a watch case 1, such as a case middle 2, a case back 3, or a bezel 4 and/or a crown 5.

### Step a) (first milling)

In the first step of the process, a zirconia (ZrO₂) doped with yttria (Y₂O₃) is milled, thereafter also called "zirconia".

Preferably, the zirconia doped with yttria comprises 1.5 to 8 mol% yttria, more preferably 3 to 4 mol/%, for instance 3 mol%.

The zirconia material may be for example provided by Tosoh Corporation under the trade name "ZPEX" available as a basic grade partially-stabilized zirconia powder with uniform dispersion of 3 mol % yttria.

The zirconia material is typically in the form of a powder or agglomerates.

Prior to the milling of step a), the raw material of zirconia may have a granule size of between 10 and 300 µm, preferably between 30 and 150 µm. While the particles of the raw material of zirconia may have a smaller size, these particles tend to agglomerate together and form larger granules.

The granule size refers to the largest dimension of the granules, for instance the diameter if the granules are spherical. It may be determined with any apparatus, for instance with a laser diffraction particle size analyzer, such as a Mastersizer of the Malvern company.

Zirconia granules are milled in the presence of a binder that facilitates the formation of the green body. The binder may be added to the zirconia material or it may be already present in the zirconia material.

The binder preferably comprises (more preferably consists of) an organic binder such as, for example, polyethylene glycol (PEG), polyvinyl alcohol (PVA), or polyacrylic acid (PAA). It may also be a mixture of two or more binders.

The milling of step a) may be carried out in any conventional device that can mill a material, for instance a grinder, preferably a ball mill.

Milling is preferably carried out in the presence of a grinding medium.

The grinding medium is advantageously selected from alumina balls, zirconia balls, and mixtures thereof.

The milling of step a) is carried out in a grinder (preferably a ball mill) at a speed of preferably between 30 and 150 rpm, more preferably between 50 and 100 rpm.

The milling of step a) is preferably carried out for a period of between 4 hours and 15 hours, preferably 5 hours to 10 hours.

The milling of step a) can be carried out for at least 4 hours at a rotation speed of less than 150 rpm, preferably less than 100 rpm and even more preferably less than 70 rpm.

Prior to step a), the doped zirconia is typically present in the form of the granule agglomerates.

The milling of zirconia is carried out long enough to properly break up these agglomerates.

The milling of step a) leads to fine zirconia particles as well as a homogeneous size distribution of these particles.

The technical effects resulting from the milling of step a) are a mixture having an improved homogeneity after step b) and/or step c), and a timepiece component or a part of a timepiece component having a uniform visual appearance.

After milling, a composition C1 is obtained.

### Step b) (mixture M1)

In step b), particles of strontium aluminate doped with at least one activating element are added to the composition C1 to form a mixture M1.

The at least one activating element may be selected from rare earth elements, preferably from La, Ce, Pr, Nd, Pm, Sm, Eu, Gd, Tb, Dy, Ho, Er, Tm, Yb and Lu. Doping strontium aluminate with any one of these elements affords the sought phosphorescent effect to the final phosphorescent ceramic article.

The activating element is preferably Eu, Dy or a mixture thereof, more preferably a mixture of Eu and Dy.

The best luminescent performances are generally obtained when using in particular Sr₄Al₁₄O₂₅ doped with Eu and Dy (Eu²⁺ /Dy³⁺).

Typically, the content of activating element (preferably Eu and/or Dy) is preferably between 0.05 and 4 mol%, preferably between 0.15 and 1 mol% (relative to the strontium aluminate material).

This low concentration in activating element (especially Eu and/or Dy) leads to a white phosphor powder, which retains a high luminescence and phosphorescence intensity.

Preferably, the mixture M1 has a dry solid content comprising between 50 to 95 wt% of zirconia, more preferably 60 to 90 wt%; and preferably 5 to 50 wt% of strontium aluminate, more preferably 10 to 40 wt%; relative to the total weight of zirconia and strontium aluminate in mixture M1.

The mixture M1 may also comprise a liquid media that is added together with the particles of strontium aluminate and/or to composition C1 prior to the milling of step a).

The liquid media may be water, a binder (preferably an organic binder) or a mixture of water and a binder (preferably an organic binder).

### Step c) (second milling)

After the addition of the phosphorescent strontium aluminate particles to the composition C1, the resulting mixture M1 is then milled.

The milling of step a) can be carried out in the milling apparatus of step a), as described above.

The milling of step c) allows homogenizing the mixture M1. It is preferably carried out in milder conditions than the milling of step a).

As such it typically requires considerably less energy E2 than the energy E1 of the milling of step a).

The milling of step c) is preferably carried out for at least 30 minutes at a rotation speed of less than 150 rpm, preferably less than 100 rpm, and even more preferably less than 70 rpm.

According to preferred embodiments, the milling speed is at minimum of 30 rpm.

According to preferred embodiments, the milling speed is the same in steps a) and c). In this case, the milling of steps a) and c) differ in their duration time, with the duration of milling of step a) being longer than the duration of milling of step c).

Preferably, the duration of the milling step c) is comprised between 30 minutes and 4 hours, for instance between 1 hour and 3 hours. It does not exceed 4 hours in order to preserve the glowing properties.

At the end of step c), the milled mixture M1 is a homogeneous slurry of zirconia primary particles, strontium aluminate (doped with at least one activating element) particles and the original binder system, preferably dispersed in a liquid media.

### Steps d) and e) (drying and green body)

Once the milling of step c) is complete, the resulting mixture is dried using any conventional method and device to afford a powder P1. It is preferably spray-dried.

The process may comprise an optional step d') of sieving powder P1, between steps d) and e). This optional step allows filtering off larger particles. For instance, sieving may be carried out through a 125 µm screen.

The powder P1 (from step d) or d')) is subsequently shaped to form the green body (step e)).

In the context of the invention, the shape of the green body corresponds to the final shape of the phosphorescent ceramic article.

The green body may be formed by various methods known by the skilled person. In a preferred embodiment, where spray drying is used the green body is formed by dry pressing to shape the ceramic material. Green machining may also be used.

### Step f) (debinding)

Once formed the green body typically undergoes different types of heating (debinding of step f) + sintering of step g)).

At first, a heating step is carried out to remove the binder (preferably an organic binder). This is called the debinding.

Removal of the binder leads to the formation of pores in the green body.

The debinding is carried out in an oxidizing atmosphere, preferably under atmospheric conditions.

In some embodiments, the oxidizing atmosphere is air.

In the context of the invention, the heating of the green body is typically performed using a heating ramp.

Preferably, the heating ramp is between 20°C/h and 110°C/h, to reach a temperature T1 comprised between 500 and 1000°C.

The temperature T1 is preferably between 500 and 900°C, more preferably between 500 and 800°C, more preferably between 500 and 700°C, more preferably between 550 and 650°C, for instance 600°C.

The heating ramp is preferably between 25 and 100°C/h.

The heating ramp may change throughout the whole debinding. For example, the green body may be heated following two or more different heating ramps.

For instance, the green body may be heated by 100°C for the first hour, then the ramp may be decreased to 25°C per hour until reaching 500 °C and finally further increased back to 100°C/h to reach the final temperature T1.

The green body is preferably kept at T1 for at least 1 hour, preferably for less than 4 hours, for instance for 2 hours.

### Step g) (sintering)

Debinding step f) is followed by sintering step g).

Sintering step g) is not a pre-sintering step, which is common in the prior art.

Sintering step g) leads to a denser ceramic material resulting from the elimination of the pores of the debinded green body.

The sintering is generally carried out in a reducing atmosphere.

Such reducing atmosphere is necessary in order to afford a luminescent material. Indeed, if the sintering step is not carried out under reducing conditions, the material does not display the properties of a phosphor and no luminescence is observed.

The reducing atmosphere advantageously comprises a mixture of a reducing agent and an inert medium selected from argon and nitrogen.

The reducing agent may be selected from hydrogen and carbon monoxide.

The reducing atmosphere is preferably a mixture of hydrogen and argon, for example forming gas composed of 5% by volume of hydrogen in argon.

In step g), the heating ramp preferably ranges from 50°C/h to 120°C/h, more preferably from 80 to 120°C/h, so as to reach temperature T2, which is between 1400 and 1600°C.

The temperature is preferably increased at a ramp of 100°C/h.

The heating ramp may change throughout the whole sintering step. For example, the debinded green body may be heated following two or more different heating ramps.

The reducing atmosphere may be changed during the sintering process.

In some embodiments, the debinded green body is heated at a first ramp until reaching a first temperature T2a of less than 700°C, preferably less than 600°C and even more preferably equal to 500°C, and then further heated at a second ramp to reach the final temperature T2. In some embodiments, the first and second ramps are identical, but the reducing atmosphere for each heating ramp up is different.

For example, the first ramp up in temperature may be conducted under argon and the second ramp up under forming gas. In other words, the sintering step g) can be partially carried out in a reducing atmosphere.

The debinded green body is preferably kept at T2 for at least 1 hour, preferably for less than 4 hours, for instance for 2 hours.

Step g) affords the phosphorescent ceramic article.

### Optional step h) (controlled cooling)

The process can comprise an additional step h).

During step h), the sintered body (phosphorescent ceramic article) is preferably cooled down to a temperature of between 100 and 700°C, preferably between 200 and less than 600°C and even more preferably between 300 and less or equal than 500°C.

In step h), the cooling ramp preferably ranges from 20°C/hour to 500°C/hour, more preferably from 50 to 300°C/hour, more preferably from 100 to 200°C/hour.

The cooling ramp may change throughout step h).

### Phosphorescent ceramic article

The phosphorescent ceramic article resulting from step g) or h) may further undergo chemical or mechanical treatments such as, without being exhaustive, traditional machining (CNC), precision machining and/or the force-free precision machining (e.g. laser machining) for example to form functional parts on the article, tumbling, milling, tribofinishing, sanding steps, and/or engraving.

The phosphorescent ceramic article may also be further treated in order to obtain a desired esthetical or functional effect, for example by etching or depositing layers on parts of its surface.

Post processing may involve PVD and/or galvanic methods.

The phosphorescent ceramic article is a timepiece component or a part of a timepiece component, wherein said timepiece component is preferably selected from the group consisting of: a case middle, an outer bezel, an inner bezel, a case back, a crown, a pusher, a bracelet link, a bracelet clasp, a bracelet buckle, a dial, a dial index, an indicating hand, an indicator disk, a main plate, a bridge, a gear, a wheel, an axle, a spring, a sprung balance, a lever, and an oscillating weight.

### FIGURES

Figure 1 shows a flow diagram of the different steps of the process according to the invention.
Figure 2 shows watch case 1 timepiece components such as a case middle 2, a case back 3, a bezel 4 and a crown 5.

### EXAMPLES

### Preparation of a phosphorescent ceramic watch case

### Materials

- ZPEX: Zirconia powder ZrO₂ stabilized with 3 mol% of yttrium Y₂O₃.

The ZPEX powder consists of submicron sized ZrO₂ agglomerated to larger spheres (for example of approx. 250 µm) using an organic binder.
- Super-LumiNova^{®} Grade-X1 BL Weiss T3 commercialised by RC TRITEC AG: Sr₄Al₁₄O₂₅ doped with Europium and Dysprosium, having the following properties:
   * d10: 1-2 µm
   * d50: 2.8-4 µm
   * d90: 5-8 µm
   and CIE LAB colour values:
   * L: 93.25 to 94.75
   * a: -1 to -3
   *b: 1 to 3

A phosphorescent zirconia-based ceramic watch case middle (ZPEX/Super-LumiNova^{®} weight ratio: 80/20) was prepared according to the following procedure:

### 1/ First milling

1000 g of zirconia powder ZPEX are loaded into a ball mill together with 1 L of doubly distilled water and 3000 g of alumina balls (diameter: 10 mm).

The ball mill is rotated at a speed of 60 rpm for 8 hours to form a composition C1A.

Then, 250 g of doped strontium aluminate (Super-LumiNova^{®}) and 250 mL of doubly distilled water are added to the composition C1A in the ball milling. The resulting mixture M1A is rotated at 60 rpm for 2 hours to afford a suspension P1A.

The suspension P1A is subsequently transferred (alumina balls are filtered off) into a beaker using 1 L of doubly distilled water.

### 21 Spray Drying

This suspension P1A is then spray dried under the following conditions:
- Instrument: Büchi Mini spray dryer B290
- Method:
   * Inlet temperature: 205°C
   * Aspirator: 100%
   * Pump speed: 25%
   * Spray gas (air) flow = 35 m³/h

The mixed suspension is thoroughly stirred during the complete spray drying process.

All collected powder fractions are combined and used to form the green body.

### 3/ Debinding

After forming the green body, by molding the spray dried ZPEX + Super-LumiNova^{®}, the pieces are put into a tube furnace for debinding and sintering.

Debinding is carried out under slight air flow with the following heating ramp:
- 0-100°C, 100°C/h
- 100-500°C, 25°C/h
- 500-600°C, 100°C/h

The temperature of 600°C, once reached, is held for 2 hours.

### 41 Sintering

Sintering is carried out in the presence of hydrogen (5% H₂ in argon) with the following heating ramp:
- 0-500°C, 100°C/h, argon
- 500-1450°C, 100°C/h, H₂/N₂ gas

The temperature of 1450°C, once reached, is held for 2 hours.

The pieces are then cooled down at a ramp of 150°C/h until being back to 500°C.

### Characteristics of the ceramic watch case obtained by the above process

The phosphorescence of the ceramic material was then measured, according to ISO17514, using a d65 lamp, after an activation period 20 minutes under 400 lux.

The ceramic watch case has a brightness, 60 minutes after the end of its activation, of more than 4800 ncd/cm².

## Claims

1. Process for the preparation of a phosphorescent ceramic article, the article being a timepiece component or a part of a timepiece component, the process comprising the following steps:
a) forming a composition C1 by milling zirconia doped with yttria and a binder,
b) adding particles of strontium aluminate doped with at least one activating element to the composition C1 to form a mixture M1,
c) milling the mixture M1,
d) forming a powder P1 by spray drying the mixture M1,
e) forming a green body by molding the powder P1,
f) debinding the green body in an oxidizing atmosphere,
wherein the debinding is carried out by heating at a ramp of between 10°C/h and 110°C/h, to reach a temperature T1 comprised between 500 and 1000°C,
g) sintering the debinded green body resulting from step f), wherein the sintering is carried out in a reducing atmosphere by heating at a ramp of between 10°C/h and 120°C/h, to reach a temperature T2 comprised between 1400°C and 1600°C,
wherein the process is free of heating treatment in an oxidizing atmosphere at a temperature higher than T1.

2. Process according to claim 1, wherein the zirconia doped with yttria comprises 1.5 to 8 mol% yttria.

3. Process according to any preceding claim, wherein the binder comprises an organic binder selected from the group consisting of: polyethylene glycol (PEG), polyvinyl alcohol (PVA), and polyacrylic acid (PAA).

4. Process according to any preceding claim, wherein the composition C1 of step a) comprises water.

5. Process according to claim 1, wherein the at least an activating element is selected from La, Ce, Pr, Nd, Pm, Sm, Eu, Gd, Tb, Dy, Ho, Er, Tm, Yb and Lu.

6. Process according to the preceding claim, wherein the doped strontium aluminate is a Eu²⁺/Dy³⁺ doped Sr₄Al₁₄O₂₅.

7. Process according to any preceding claim, wherein the mixture M1 has a dry solid content comprising 50 to 95 wt% of zirconia, and 5 to 50 wt% of strontium aluminate.

8. Process according to any preceding claim, wherein the milling of step c) is carried out in milder conditions than the milling of step a).

9. Process according to any preceding claim, wherein, in step a), milling is carried out for at least 4 hours at a rotation speed of less than 150 rpm, preferably less than 100 rpm.

10. Process according to any preceding claim, wherein, in step c), milling is carried out for at least 30 minutes at a rotation speed of less than 150 rpm, preferably less than 100 rpm.

11. Process according to any preceding claim, wherein the milling of steps a) and c) is carried out in a ball mill in the presence of a grinding medium,
and wherein, in step e), the green body is formed by dry pressing.

12. Process according to any preceding claim, wherein, in step f), debinding is carried out under atmospheric conditions.

13. Process according to any preceding claim, wherein, in step f), temperature T1 is held for at least 1 hour, preferably for less than 4 hours.

14. Process according to any preceding claim, wherein, in step g), temperature T2 is held for at least 1 hour, preferably for less than 4 hours.

15. Process according to any preceding claim, wherein said timepiece component is selected from the group consisting of: a case middle, an outer bezel, an inner bezel, a case back, a crown, a pusher, a bracelet link, a bracelet clasp, a bracelet buckle, a dial, a dial index, an indicating hand, an indicator disk, a main plate, a bridge, a gear, a wheel, an axle, a spring, a sprung balance, a lever, and an oscillating weight.
